# NOUVEAU FASCICULE DE BREVET EUROPEEN

(11) **EP 1 342 495 B2**
(45) Date de publication et mention de la décision concernant l'opposition: **27.02.2013**
(45) Mention de la délivrance du brevet: 03.01.2007
(21) Numéro de dépôt: 03290426.0
(22) Date de dépôt: 21.02.2003
(51) Int. Cl.: B01D 53/00, C03B 37/075

(54) **Procede et equipement de traitement de rejets gazeux provenant d'une unite de fabrication d'une preforme de fibre optique**
Verfahren und Einrichtung zur Behandlung von Abgasen aus einer Anlage zur Herstellung einer Vorform für optische Fasern
Process and equipment for treatment of exhaust gases from a plant manufacturing an optical fiber preform

(30) Priorité: 07.03.2002 FR 0202899
(43) Date de publication de la demande: 10.09.2003
(73) Titulaire: Draka Comteq B.V., 1083 HJ Amsterdam (NL)
(72) Inventeur: Calvo, Laurent, 59000 Lille (FR); Gallardo, Cyrill, 59130 Lambersart (FR)
(74) Mandataire: Blokland, Arie

(56) Documents cités:
- EP-A1- 1 264 798
- DE-A- 3 206 145
- DE-A1- 3 139 705
- DE-A1- 3 203 743
- DE-A1- 3 429 956
- DE-A1- 4 001 330
- DE-A1- 4 333 792
- DE-C- 4 110 064
- DE-C1- 4 134 293
- DE-C1- 19 645 487
- DE-C1- 19 852 914
- DE-T3- 68 917 335
- US-A- 4 578 253
- US-A- 4 968 336
- US-A- 6 149 884
- H BARNERT-WIEMER: 'Abgasbehandlung bei der chlorienden Wiederaufbereitung grap' BERICHTE DER KERNFORSCHUNGSANTALT JÜLICH no. 826, 1972, pages 13-14 - AND84

## Description

L'invention se rapporte au procédé de fabrication d'une préforme de fibre optique occasionnant le rejet d'effluents gazeux contenant des composés halogénés. La présente invention concerne plus particulièrement le traitement de ces effluents en vue de leur récupération ou de leur élimination. Elle s'étend en outre à l'équipement permettant la mise en oeuvre de ce procédé.

Le dépôt chimique en phase vapeur ou CVD (acronyme de Chemical Vapor Déposition) est une opération comprise dans le procédé de fabrication de préformes destinées à l'élaboration de fibres optiques. Sur un appareil rotatif type tour de verrier, on monte un tube de silice creux dans lequel est injecté un mélange comprenant plusieurs gaz, notamment des composés halogénés à l'état gazeux comme les tétrachlorures de silicium SiCl4 et de germanium GeCl₄. Un chalumeau balaye le tube d'une extrémité à l'autre sur toute sa longueur dans un sens puis dans le sens opposé, ce qui représente une passe. Sous l'effet de la température, les halogénures s'oxydent, formant des suies qui se déposent sur les parois internes du tube et sont finalement vitrifiées. On dépose ainsi plusieurs couches successives de verre à l'intérieur du tube. La première passe a pour but de permettre aux différents systèmes mis en oeuvre de s'équilibrer en température. Au cours de cette première passe, les halogénures gazeux ne sont pas dirigés dans le tube, mais évacués directement vers la sortie. Les halogénures sont considérés comme des polluants, et il n'est pas acceptable de les libérer dans l'atmosphère. Pour des raisons écologiques, les halogénures doivent donc être éliminés ou récupérés. Habituellement cette récupération s'effectue par l'intermédiaire d'une "boîte à suies" (soot box), récipient destiné à recueillir les particules qui se forment lorsque les halogénures sont mis au contact de l'air humide ambiant. Or, ce dépôt se poursuit dans le réseau de canalisations. Des amas de particules solides se forment qui sont en grande partie la cause du bouchage des canalisations.

Un procédé connu du document FR-2 522 278 permet de traiter ces rejets gazeux pour en récupérer le germanium. Ce procédé comprend notamment une étape consistant à faire passer les effluents gazeux dans un laveur. L'effluent est ainsi mis en contact avec une solution aqueuse. On utilise notamment une solution suffisamment basique pour que les chlorures, notamment le tétrachlorure de germanium GeCl₄, soient piégés par hydrolyse. Peur des raisons de coût, le germanium est ensuite récupéré par addition dans le milieu aqueux d'un agent de précipitation comprenant un cation multivalent. Le document FR-2 773 724 propose d'utiliser comme agent de précipitation de la magnésie MgO.

DE 41 10 064 décrit l'usine de réutilisation pour les hydrocarbures halogénés par extincteur à un récipient pour ces derniers plus un raccordement vidant pour l'extincteur lié par l'intermédiaire d'une ligne pompée dans le récipient. Une pompe de vide devrait se relier au raccordement d'évacuation pour évacuer les phases gazeuses de l'extincteur ainsi la phase gazeuse peut-être alimentée par l'intermédiaire d un compresseur à un condensateur d'où elle décompose en phase gazeuse de pression composée principalement de gaz inerte et autrement de condensat. La sortie de condensateur peut-être reliée au récipient de collecteur et à la sortie de gaz de pression du condensateur par intermédiaire du compresseur à l'accumulateur de gaz de pression.

Par exemple, le brevet américain US 6,149,884 propose un procédé de traitement de rejets gazeux du type chlorure d'hydrogène HCl et tétrachlorure de germanium GeCl₄ rejetés par une unité de fabrication d'une préforme de fibre optique, dans lequel on abat les chlorures à la soude, conduisant à la formation d'un effluent liquide contenant le germanium et de l'hypochlorite, et on réduit l'hypochlorite par addition d'acide formique à l'effluent.

La présente invention a pour but de proposer un procédé de fabrication d'une préforme de fibre optique dans lequel la maintenance est réduite. Plus particulièrement l'invention propose un procédé de traitement des rejets gazeux qui permet de réduire les risques de colmatage des canalisations et de faciliter le recyclage c es effluents.

L'objet de la présente invention est un procédé de traitement de rejets gazeux contenant des composés halogénés, provenant d'une unité de fabrication d'une préforme de fibre optique, comprenant une étape de formation d'un effluent liquide à partir desdits rejets gazeux, caractérisé en ce que lors de la première passe du chalumeau le flux gazeux halogéné est dirigé vers une étape de condensation desdits rejets gazeux et une étape de collecte de l'effluent liquide résultant de la condensation, et les rejets gazeux des passes suivantes sont dirigés vers l'entrée d'une boîte à suies sans une étape de condensation et de collecte.

De préférence la condensation est obtenue par refroidissement. Par exemple on réalise la condensation en faisant circuler les rejets gazeux dans un dispositif réfrigérant comme un échangeur thermique. La condensation pourrait aussi être obtenue par compression. Après condensation, l'effluent liquide est recueilli dans un récipient collecteur pour être ensuite retraité.

L'équipement pour la mise en oeuvre du procédé selon l'invention comprend au moins un condenseur et au moins un récipient collecteur du condensat et une boîte à suies. De préférence, le condenseur est un dispositif réfrigérant.

Le boite a suies sert à faire réagir les chlorures résiduels en les mettant en présence d'humidité. Tout au long de la ligne de fabrication et jusqu'à leur entrée de la boite à suies, les chlorures ne sont en contact qu'avec des gaz secs. Lors de leur arrivée dans la boite à suies, ils sont mêlés à un air ambiant humide et forment des particules solides. La boite à suies a pour rôle de provoquer le phénomène de solidification et d'en recueillir les produits. Compte-tenu du volume important de gaz à traiter, la première passe fait l'objet d'une opération distincte mettant en oeuvre cet équipement. Plusieurs lignes de fabrication peuvent ainsi se partager l'utilisation de cet équipement et fonctionner de manière simultanée.

La présente invention a comme avantage de permettre la récupération d'une proportion importante des halogénures rejetés, et en conséquence d'améliorer notamment la récupération du germanium. Outre le recyclage des espèces halogénées, la réduction du volume d'effluent transitant par la boîte à suies a pour effet de diminuer considérablement l'encrassement des canalisations, et donc d'éliminer le problème de refoulement dû au colmatage du réseau et de réduire la maintenance de l'équipement. Enfin l'enlèvement des déchets accumulés dans les boîtes à suies n'est plus nécessaire, ce qui amène une réduction du coût de production.

L'invention sera mieux comprise et d'autres avantages et particularités apparaîtront à la lecture de la description qui va suivre, donnée à titre illustratif et non limitatif, accompagnée des dessins annexés parmi lesquels :
- la figure 1 représente de manière schématique un mode de réalisation d'une installation pour le dépôt en phase vapeur (CVD) au cours du procédé de fabrication d'une préforme de fibre optique, ne pas selon l'invention.
- la figure 2 montre, pour un autre mode de réalisation, le schéma de principe du système de traitement des rejets gazeux,
- la figure 3 montre schématiquement une installation comprenant un système de traitement des rejets gazeux commun à deux lignes de CVD pour la fabrication de préforme.

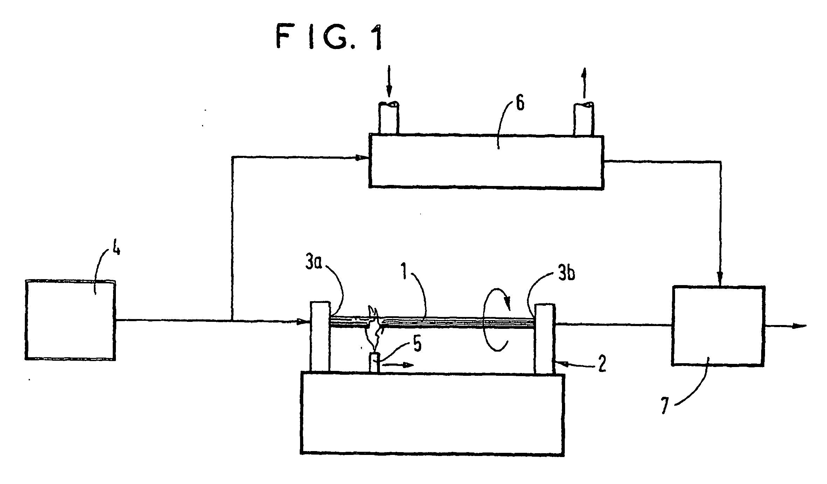

La figure 1 représente un tube de silice **1** creux fixé sur un appareil rotatif **2**, de type tour de verrier, par ses deux extrémités **3a** et **3b**. Un flux gazeux **4** est envoyé à l'intérieur du tube. Il entre par l'extrémité **3a** et en ressort par l'extrémité **3b**. Le flux gazeux **4** est composé d'un mélange comprenant plusieurs gaz, et en particulier des composés chlorés comme le tétrachlorure de silicium SiCl₄, le tétrachlorure de germanium GeCl4 et l'oxychlorure de phosphore POCl₃. Un chalumeau **5** balaye le tube **1** sur toute sa longueur, ce qui produit l'oxydation des chlorures. Les chlorures oxydés forment des suies qui se déposent sur les parois internes du tube **1** et sont finalement vitrifiées. On dépose ainsi plusieurs couches successives de verre à l'intérieur du tube. Lors de la première passe, afin de permettre aux différents éléments mis en oeuvre de s'équilibrer en température, le flux gazeux halogéné n'est pas envoyé dans le tube mais dirigé vers un équipement de traitement **6**, avant de traverser une boîte à suies **7**, ne pas selon l'invention.

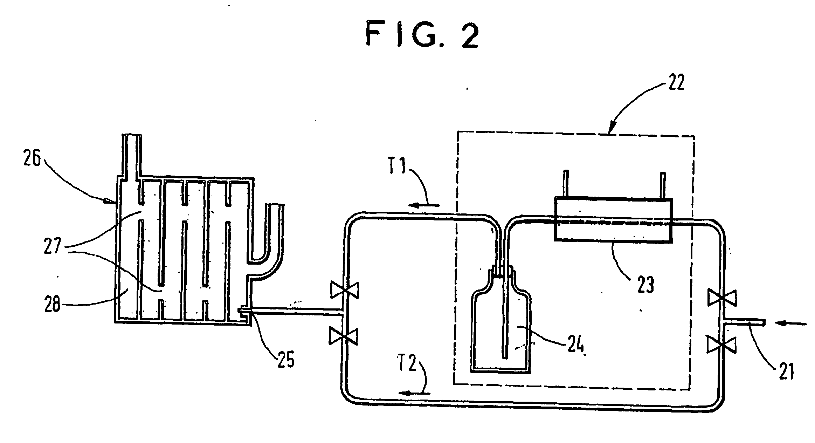

Sur la figure 2, on remarque sur la droite du schéma l'arrivée **21** des rejets gazeux provenant de la fabrication de la préforme. A la première passe lors de l'équilibrage en température des systèmes en présence, les rejets gazeux contiennent une concentration importante en composés halogénés. Le flux gazeux emprunte alors le trajet **T1** qui comporte un passage dans un équipement de traitement **22**, composé d'un dispositif de condensation **23** des gaz et d'un dispositif de collecte **24** de l'effluent liquide résultant de la condensation. Le dispositif **23** est un échangeur thermique dont le fluide réfrigérant est par exemple de l'eau à environ 4°C. Les gaz entrants se trouvent brutalement refroidis et condensés sous forme liquide. Le liquide s'écoulant de l'échangeur **23** est recueilli dans un récipient collecteur **24** dans lequel s'accumulent les liquides en vue de leur retraitement.

Aux étapes suivantes de la fabrication de la préforme, les rejets gazeux contiennent peu ou pas de composés halogénés. Afin d'éviter l'entraînement des liquides condensés lors de la première passe, les rejets gazeux des passes suivantes, exempts de composés halogénés, empruntent alors le trajet **T2** qui ne comporte pas d'équipement de traitement. Les trajets **T1** et **T2** se rejoignent pour diriger les résidus gazeux qui n'ont pas pu être condensés vers l'entrée **25** d'une boîte à suies **26** où les chlorures résiduels se déposent. Jusqu'à leur entrée dans la boîte à suies, les chlorures ne sont en contact qu'avec des gaz secs. Lors de leur arrivée dans la boite à suies, ils sont mêlés à de l'air ambiant humide et se solidifient. La boîte à suies est conçue de manière à amplifier ce phénomène de solidification. Des chicanes **27** placées à l'intérieur de la boite à suies servent à favoriser le brassage entre l'air humide et les chlorures, tandis que le remplissage **28** entre les chicanes **27** est constitué d'anneaux en matière plastique qui servent à augmenter la surface sur laquelle viendront se former les particules solides.

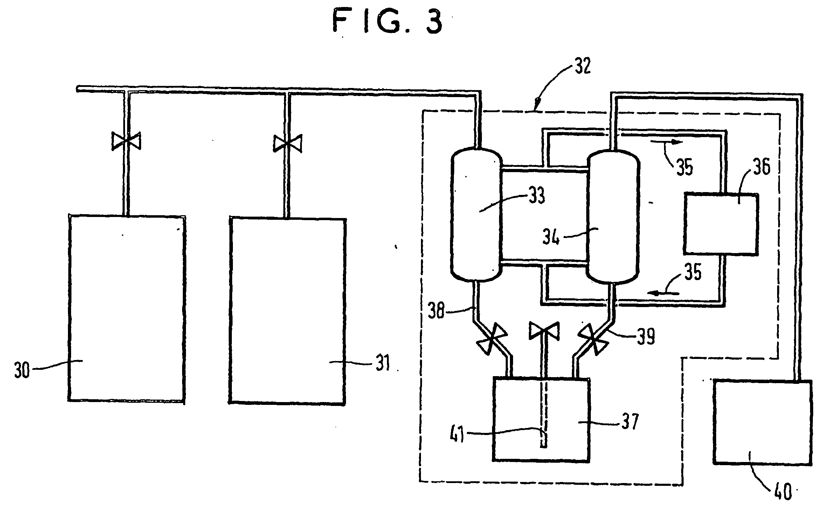

Sur la figure 3, on a représenté une installation comportant deux lignes de CVD **30** et **31** reliées à un équipement de traitement **32** commun aux deux lignes **30** et **31**. L'installation pourrait tout aussi bien comporter trois lignes de CVD ou plus. L'équipement de traitement **32** comprend un premier condenseur **33** et un second condenseur **34**, tous deux réfrigérés par la circulation d'eau froide **35** provenant d'un groupe réfrigérant **36**. A la sortie du premier condenseur **33**, l'effluent liquide obtenu est recueilli dans un récipient collecteur **37** grâce à une tubulure d'entrée **38.** L'effluent non liquéfié traverse le récipient **37** et est envoyé dans un second condenseur **34** par l'intermédiaire d'une tubulure de sortie **39**. Sous l'effet de la gravité, la partie condensée de l'effluent retourne dans le récipient **37** par la tubulure **39**. A la sortie du condenseur **34**, l'effluent résiduel non condensable se dirige vers une boîte à suies **40**. Une canne plongeante **41** permet de vidanger le récipient **37** en évitant le contact avec l'air libre, vers un conteneur adapté au transport de ce type de produit. L'effluent liquide est alors évacué en vue de son recyclage.

Lors du premier passage, chaque ligne de fabrication **30**, **31** est connectée à l'équipement de traitement **32** pour condenser les halogénures contenus dans l'effluent gazeux. Un équipement analogue à celui de la figure 3 à permis la récupération dans l'effluent condensé de près de 60% en poids des halogénures rejetés.

## Revendications

1. Procédé de traitement de rejets gazeux contenant des composés halogénés, provenant d'une unité de fabrication d'une préforme de fibre optique selon le dépôt chimique en phase vapeur (CVD), comprenant une étape de formation d'un effluent liquide à partir desdite rejets gazeux, **caractérise en ce que** lors de la première passe du chalumeau (5) le flux gazeux halogéné est dirigé vers une étape de condensation desdite rejets gazeux et une étape de collecte de l'effluent liquide résultant de la condensation, et les rejets gazeux des passes suivantes sont dirigés vers l'entrée (26) d'une boîte à suies (26) sans une étape de condensation et de collecte.

2. Procédé selon la revendication 1, dans lequel ladite condensation est obtenue par refroidissement.

3. Procédé selon la revendication 2, dans lequel ladite condensation est réalisée en faisant circuler les rejets gazeux dans un dispositif réfrigérant.

4. Procédé selon l'une des revendications précédentes, dans lequel l'effluent liquide est recueilli dans un récipient collecteur en vue de son retraitement,

5. Equipement de traitement de rejets gazeux, contenant des composés halogénés, provenant d'une unité de fabrication d'une préforme de fibre optique, comprenant au moins un dispositif de condensation (23, 33, 34) des gaz, un dispositif de collecte (24, 37) de l'effluent liquide résultant de la condensation et une boîte a suies (28, 40) disposée à la sortie du dispositif de collecte (24) ou d'un des dispositifs de condensation (34).

6. Equipement selon la revendication 5, dans lequel le dispositif de condensation est un dispositif réfrigérant.

7. Equipement selon l'une des revendications 5 et 6, dans lequel à l'intérieur de la boîte à suies (26, 40), des chicanes (27) sont placées pour favoriser le brassage entre l'air humide et les composés halogénés.

## Claims

1. Method for processing gaseous waste containing halogenated compounds from a unit for manufacturing an optical fibre preform by chemical vapour deposition (CVD), comprising a step of forming a liquid effluent from said gaseous waste, **characterised in that** during the first pass of the torch (5) the halogenated gas flow is directed toward a step of condensation of said gaseous waste and a step of collection of the liquid effluent resulting from the condensation, and the gaseous waste of subsequent steps is directed toward the inlet (26) of a soot box (28) with no step of condensation and collection.

2. Method according to claim 1, wherein said condensation is obtained by cooling.

3. Method according to claim 2, wherein said condensation is carried out by circulating the gaseous waste in a refrigerator device.

4. Method according to any one of the preceding claims, wherein the liquid effluent is collected in a collecting vessel for reprocessing.

5. Equipment for processing gaseous waste containing halogenated compounds from a unit for manufacturing an optical fibre preform, comprising at least one device (23, 33, 34) for condensing the gases, a device (24, 37) for collecting the liquid effluent resulting from the condensation and a soot box (26, 40) disposed at the outlet of the collecting device (24) or of one of the condensing devices (34)

6. Equipment according to claim 5, wherein the condenser device is a refrigerator device.

7. Equipment according to either of claims 5 and 6, wherein chicanes (27) are placed inside the soot box (26, 40) to promote mixing between the moist air and the halogenated compounds.

## Patentansprüche

1. Verfahren zur Behandlung von halogenierte Verbindungen enthaltenden Abgasen, die aus einer Fertigungsanlage für eine Glasfaservorform nach chemischer Gasphasenabscheidung (CVD) stammen, mit einem Schritt des Erzeugens von Abwasser aus den Abgasen, **dadurch gekennzeichnet, dass** während des ersten Durchlaufs eines Brenners (5) der halogenierte Gasfluss zu einem Schritt des Kondensierens der Abgase und einem Schritt des Sammelns des aus der Kondensation entstehenden Abwassers geleitet wird, und dass die Abgase nachfolgender Durchläufe zu einem Eingang (26) eines Rußkastens (26) geleitet werden ohne einen Schritt der Kondensation und des Sammelns.

2. Verfahren nach Anspruch 1, in welchem die Kondensation durch Kühlung bewirkt wird.

3. Verfahren nach Anspruch 2, in welchem die Kondensation erzielt wird, indem die Abgase in einer Kühlvorrichtung umgewälzt werden.

4. Verfahren nach einem der vorhergehenden Ansprüche, in welchem das Abwasser zu seiner Wiederaufbereitung in einem Sammelbehälter aufgefangen wird.

5. Anlage zur Behandlung von halogenierte Verbindungen enthaltenden Abgasen, die aus einer Fertigungsanlage für eine Glasfaservorform stammen, mit wenigstens einer Kondensationsvorrichtung (23, 33, 34) für Gase, einer Sammelvorrichtung (24, 37) des aus der Kondensation entstehenden Abwassers und einem Rußkasten (26, 40), der am Ausgang der Sammelvorrichtung oder einer der Kondensationsvorrichtungen (34) angeordnet ist.

6. Anlage nach Anspruch 5, bei welcher die Kondensationsvorrichtung eine Kühlvorrichtung ist.

7. Anlage nach Anspruch 5 oder 6, bei welcher im Inneren des Rußkastens (26, 40) Ablenkplatten (27) angebracht sind um die Durchmischung zwischen der feuchten Luft und den halogenierten Verbindungen zu fördern.
